# EUROPÄISCHE PATENTSCHRIFT

(11) **EP 1 218 997 B1**
(45) Veröffentlichungstag und Bekanntmachung des Hinweises auf die Patenterteilung: **23.11.2005**
(21) Anmeldenummer: 00982940.9
(22) Anmeldetag: 27.09.2000
(51) Int. Cl.: H02H 3/247

(54) **UNTERSPANNUNGAUSLÖSER MIT ELEKTROMAGNET UND GETAKTETEM HALTESTROMKREIS**
UNDERVOLTAGE RELEASE WITH AN ELECTROMAGNET AND CLOCKED HOLDING CURRENT CIRCUIT
DECLENCHEUR A MINIMUM DE TENSION COMPRENANT UN ELECTRO-AIMANT ET UN CIRCUIT D'ARRET CADENCE

(30) Priorität: 30.09.1999 DE 19948696
(43) Veröffentlichungstag der Anmeldung: 03.07.2002
(73) Patentinhaber: SIEMENS AKTIENGESELLSCHAFT, 80333 München (DE)
(72) Erfinder: PANCKE, Andreas, 13507 Berlin (DE); REHAAG, Hans, 16341 Zepernick (DE); RÖHL, Wolfgang, 13503 Berlin (DE)
(86) Internationale Anmeldenummer: PCT/DE2000/003435
(87) Internationale Veröffentlichungsnummer: WO 2001/026200

(56) Entgegenhaltungen:
- EP-A- 0 203 366
- DE-A- 19 507 936

## Beschreibung

Die Erfindung liegt auf dem Gebiet der Schutztechnik für ein- oder mehrphasiger Niederspannungsnetze und ist bei der schaltungstechnischen Ausgestaltung eines Unterspannungsauslösers anzuwenden, der einen Elektromagneten zur Auslösung eines Schaltgerätes, wenn die Spannung des Netzes eine vorbestimmte Größe unterschreitet, und eine den Elektromagneten speisende Treiberschaltung enthält, wobei die Treiberschaltung eine Gleichrichterschaltung, eine Hilfsspannungsquelle, einen Impulsgeber zur Erzeugung eines getakteten Haltestromes für den Elektromagneten und eine mit einem Unterspannungsdetektor versehene Schwellwertschaltung zur Unterbrechung des Haltestromes umfasst.

Bei einem bekannten Unterspannungsauslöser dieser Art dienen die Gleichrichterschaltung zur Gewinnung eines Gleichstromes, die der Gleichrichterschaltung nachgeordnete Hilfsspannungsquelle zur Spannungsversorgung der Elektronik und der Impulsgeber zur Erzeugung eines bei ausreichender Höhe der Netzspannung von dieser im wesentlichen unabhängigen Haltestromes; der Impulsgeber weist dabei einen Operationsverstärker und einen durch den Operationsverstärker gesteuerten elektronischen Schalter auf, welcher in Reihe mit einem Widerstand im Haltestromkreis des mit einer Freilaufdiode beschalteten Elektromagneten liegt. Weiterhin enthält der Impulsgeber einen Rückkopplungspfad zur Einwirkung der an dem Widerstand abfallenden Spannung auf den Eingang des Operationsverstärkers (US 4,788 621 A, DE 195 07 936 A1). Es ist weiterhin bekannt, einen solchen Unterspannungsauslöser mit einem Überstromauslöser zu kombinieren, wobei der Überstromdetektor optoelektronisch auf einen weiteren elektronischen Schalter einwirkt, der parallel zum Elektromagneten und der Freilaufdiode angeordnet und diese ggf. kurzschließt (US 4,890,184).

Bei den bekannten Unterspannungsauslösern dient die parallel zum Elektromagneten angeordnete Freilaufdiode dazu, dass der Elektromagnet bei kurzzeitigen Unterschreitungen einer Mindestspannung oder bei kurzzeitigen Unterbrechungen sich selber hält. Die sich hierbei einstellende Auslöseverzögerung liegt bei mehr als 100 ms. - Es ist bekannt, die Auslöseverzögerung durch Verwendung eines Kondensators und durch parallele Anordnung einer Reihenschaltung aus einem Widerstand und einem weiteren elektronischen Schalter zu dem in Reihe mit dem Elektromagneten liegenden Widerstand zu vergrößern (DE 195 07 936 A1).

Ansich ist eine Steuervorrichtung für elektromagnetische Schaltgeräte bekannt, bei der im Stromkreis einer Magnetspule zwei Schaltelemente angeordnet sind, von denen das eine in einem Selbsthaltestromkreis liegt, der durch eine Freilaufdiode gebildet ist. Zweck dieser Schaltungsanordnung ist es, bei nicht ordnungsgemäßem Steuerkommando (schlechte Kontaktgabe, mehrere Impulse statt eines konstanten Signales) oder auch bei stark schwankender Steuerspannung (Spannungseinbruch durch Einschalten eines verbrauchern mit hoher Leistung) nachteilige Auswirkungen, insbesondere für die Schaltkontakte des elektromagnetischen Schaltgerätes zu verhindern (EP 0 203 366 A1).

Im Unterschied zu einem elektromagnetischen Schaltgerät (Schütz) handelt es sich bei Gegenstand der vorliegenden Erfindung um ein messendes Schutzgerät, für das entsprechend unterschiedliche Grundsätze gelten. So geht die Erfindung im Unterschied zu der bekannten Schaltungsanordnung von einer getakteten Stromversorgung einer Magnetspule aus, um deren Energiebedarf so weit wie möglich zu senken. Dies ist für einen Unterspannungsauslöser wesentlich, weil bei diesem der erregte Zustand der Magnetspule der Normalzustand ist.

Da es bei Unterspannungsauslösern mitunter wünschenswert ist, den mit getaktetem Haltestrom versorgten Elektromagneten auch bei kurzzeitigen Unterschreitungen einer Mindestspannung oder bei kurzzeitigen Spannungsunterbrechungen in möglichst kurzer Zeit (weniger als 100 ms) zum Abfallen zu bringen, liegt der Erfindung - ausgehend von einem Unterspannungsauslöser mit den Merkmalen des Oberbegriffes des Patentanspruches 1 - die Aufgabe zugrunde, eine hierfür geeignete Schaltungsanordnung zu schaffen.

Zur Lösung dieser Aufgabe ist gemäß der Erfindung vorgesehen, dass in dem aus dem Elektromagneten und der Freilaufdiode gebildeten Selbsthaltestromkreis ein weiterer elektronischer Schalter zwischen dem Elektromagneten und dem erstgenannten elektronischen Schalter angeordnet ist und dass zur Ansteuerung des weiteren elektronischen Schalters in Abhängigkeit vom Ausgangssignal des Unterspannungsdetektors und vom Schaltzustand des erstgenannten elektronischen Schalters ein Zeitglied vorgesehen ist, das einen Widerstand und einen Kondensator aufweist, wobei zum Durchschalten des weiteren elektronischen Schalters bei durchgeschaltetem elektronischen Schalter der Kondensator aufgeladen und zum Sperren des weiteren elektronischen Schalters bei gesperrtem elektronischen Schalter der Kondensator über den Widerstand entladen wird.

Die gemäß der Erfindung vorgesehene Ausgestaltung der Schaltungsanordnung ermöglicht es, auch bei einem mit getaktetem Haltestrom betriebenen Selbsthaltestromkreis einen zusätzlichen elektronischen Schalter zu aktivieren, der im Stromkreis der Freilaufdiode liegt und der somit den Selbsthaltestromkreis des Elektromagneten mit einer Verzögerung von weniger als 100 ms unterbrechen kann.

Vorzugsweise ist der weitere elektronische Schalter durch eine Brücke kurzschließbar.

Das Zeitglied ist mit Vorzug zwischen die Anschlusspunkte "gate" und "source" des weiteren elektronischen Schalters geschaltet und über eine Diodenschaltung an die Hilfsspannungsquelle angekoppelt.

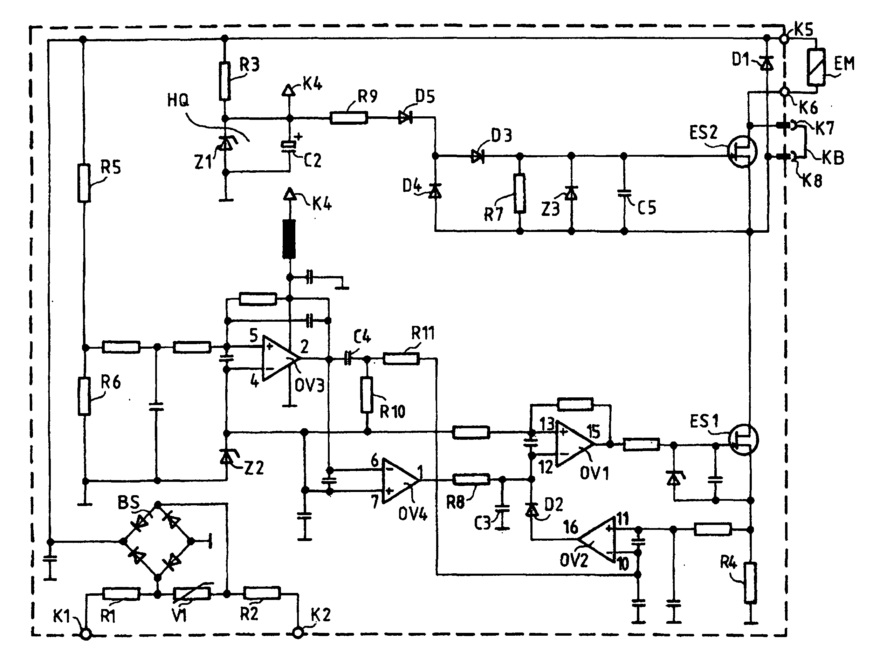

Ein Ausführungsbeispiel einer gemäß der Erfindung ausgebildeten Schaltungsanordnung ist in der Figur dargestellt.

Die von dem Unterspannungsauslöser zu überwachende Spannung liegt an den Klemmen K1 und K2 an. Den Klemmen nachgeschaltet sind strombegrenzende Widerstände R1 und R2, ein Varistor V1 und eine Brückenschaltung BS zur Gleichrichtung der anliegenden Wechselspannung und zur Bereitstellung eines Gleichstromes für die an die Klemmen K5/K6 anschließbare wicklung eines Elektromagneten EM zur Auslösung eines nicht näher dargestellten Niederspannungs-Leistungsschalters. Der Gleichrichterschaltung BS nachgeordnet ist eine Hilfsspannungsquelle HQ mit einem Spannungsteiler aus Widerstand R3 und Spannungsbegrenzer Z1 sowie einem Glättungs- und Speicherkondensator C2. Vom Anschlusspunkt K4 wird ein integrierter Schaltkreis mit den Operationsverstärkern OV1, OV2, OV3 und OV4 mit Energie versorgt.

In Reihe mit der Wicklung des Elektromagneten EM sind ein Widerstand R4 und ein elektronischer Schalter ES1 geschaltet; elektrisch parallel zur Wicklung des Elektromagneten EM ist eine als Freilaufdiode bezeichnete Diode D1 angeordnet, über die ein Selbsthaltestromkreis für den Elektromagneten EM geschlossen ist, und zwar unabhängig davon, ob eine auf die Klemmen K7/K8 steckbare Kurzschlussbrücke KB gesteckt ist oder nicht. - Der elektronische Schalter ES1 ist Teil eines Impulsgebers zur Taktung des Haltestromes für den Elektromagneten und ist durch den Operationsverstärker OV1 steuerbar, dessen Eingänge 12 und 13 über die weiteren Operationsverstärker OV2, OV3 und OV4 mit Referenz- und Messspannungen versorgt werden. Der in einem Rückkopplungspfad liegende Operationsverstärker OV2 erhält dabei seine Referenzspannung am Eingang 10 von einer Referenzspannungsdiode Z2 über die Widerstände R10/R11 und gegebenenfalls impulsartig vom Ausgang 2 des Operationsverstärkers OV3 über den Kondensator C4.; seine Messspannung erhält er vom Spannungsabfall am Widerstand R4. - Dem Operationsverstärker OV2 nachgeschaltet sind eine Diode D2 und ein Kondensator C3. Der Kondensator C3 liefert eine variable Ansteuerspannung für den Eingang 12 des Operationsverstärkers OV1.

Der Operationsverstärker OV3 fungiert als Unterspannungsdetektor und ist Teil einer Schwellwertschaltung zur Unterbrechung des den Elektromagneten im angezogenen Zustand haltenden Haltestromes. Der Operationsverstärker OV3 wird hierzu an seinem Eingang 5 über einen Spannungsteiler R5/R6 angesteuert. Am Eingang 4 ist mittels der Referenzspannungsdiode Z2 eine kleine Referenzspannung definiert. - Der Ausgang des Operationsverstärkers OV3 ist auf den Eingang 6 des Operationsverstärkers OV4 geschaltet; da der Referenzeingang 7 des Operationsverstärkers OV4 die gleiche Referenzspannung wie der Referenzeingang 4 des Operationsverstärkers OV3 erhält, wirkt der Operationsverstärker OV4 als Inverter zum Operationsverstärker OV3. - Der Ausgang 1 des Operationsverstärkers OV 4 ist an den Kondensator C3 und damit an den Eingang 12 des Operationsverstärkers OV1 angekoppelt.

Im Haltestromkreis des Elektromagneten EM und zugleich in dem die Freilaufdiode D1 enthaltenden Selbsthaltestromkreis ist in Reihe zum elektronischen Schalter ES1 ein weiterer elektronischer Schalter ES2 angeordnet, zu dessen Ansteuerung ein Zeitglied aus Widerstand R7 und Kondensator C5 in Kombination mit einer Zehnerdiode Z3 vorgesehen ist, wobei dieses Zeitglied mit seinem einem Pol über eine Diodenschaltung D3, D4, D5 an die Hilfsspannungsquelle HQ angekoppelt ist.

Der weitere elektronische Schalter ES2 ist bei gesteckter Kontaktbrücke KB kurzgeschlossen, so dass im Fall einer kurzzeitig auftretenden Unterspannung an den Klemmen K1/K2 der Selbsthaltestromkreis über die Freilaufdiode D1 mit einer Abfallverzögerung von mehr als 100 ms aktiviert ist. Bei gezogener Kontaktbrücke KB ist in den Selbsthaltestromkreis zusätzlich der elektronische Schalter ES2 eingebunden, der bei Abschaltung den Stromfluss durch den Elektromagneten EM sofort unterbricht.

Bei ausreichender Eingangsspannung an den Klemmen K1/K2 geht der Ausgang 2 des Operationsverstärkers OV3 auf "high", wodurch der Ausgang 1 des Inverters OV4 auf "low" geht. Dadurch kann sich der am Eingang 12 des Operationsverstärkers OV1 liegende Kondensator C3 entladen; bei Erreichen der am Referenzeingang 13 des Operationsverstärkers OV1 liegenden Spannung springt der Ausgang 15 des Operationsverstärkers OV1 auf "high", wodurch der elektronische Schalter ES1 leitend wird. Da auch der Eingang des elektronischen Schalters ES2 auf "high" liegt und demzufolge ES2 leitend ist, beginnt ein ansteigender Strom durch die Wicklung des Elektromagneten EM zu fließen.

Der ansteigende Strom erzeugt am Widerstand R4 einen zunehmenden Spannungsabfall. Wenn dieser Spannungsabfall größer wird als die am Referenzeingang 10 des Operationsverstärkers OV2 liegende, von der Referenzspannungsdiode Z2 eingekoppelte Vergleichsspannung, springt der Ausgang 16 des Operationsverstärkers OV2 auf "high", wodurch der Operationsverstärker OV1 umgesteuert wird und am Ausgang 15 auf "low" geht. Dadurch wird der elektronische Schalter ES1 abgeschaltet und der Elektromagnet EM hält sich vorübergehend über den Selbsthaltestromkreis.

Infolge des auf "high" liegenden Ausganges 16 des Operationsverstärkers OV2 kann sich auch der Kondensator C3 aufladen. Nach Abschaltung des elektronischen Schalters ES1 geht der Spannungsabfall am Widerstand R4 auf Null und der Ausgangs 16 des Operationsverstärkers OV2 auf "low". Demzufolge entlädt sich jetzt der Kondensator C3; sobald die Kondensatorspannung die Referenzspannung am Eingang 13 des Operationsverstärkers OV1 unterschreitet, springt der Ausgang 15 des Operationsverstärkers OV1 auf "high" und der elektronische Schalter ES1 wird geschlossen. Die Taktfrequenz dieses Schaltvorganges beträgt etwa 1 kHz.

Wenn bei gesteckter Koppelbrücke KB an den Eingangsklemmen K1/K2 die Spannung unter den unteren Unterspannungswert fällt, schaltet der Ausgang des Operationsverstärkers OV3 auf "low", der Ausgang des Inverters OV4 geht auf "high", der Ausgang des OV1 auf "low" und der elektronische Schalter ES1 wird abgeschaltet. Die Wicklung des Elektromagneten EM treibt über die Diode D1 einen abnehmenden Strom, der nach ca. 100 bis 200 µs nicht mehr ausreicht, um den Elektromagneten zu halten.

Wenn bei gezogener Koppelbrücke KB an den Eingangsklemmen K1/K2 die Spannung unter den unteren Unterspannungswert fällt, wird der elektronische Schalter ES1 ebenfalls abgeschaltet. Solange ES1 leitend war, wurde der Kondensator C5 über den Widerstand R9 und die Dioden D5, D3 aufgeladen und schaltete damit den elektronischen Schalter ES2 durch. Wenn nun der elektronische Schalter ES1 sperrt, entlädt sich der Kondensator C5 über den Widerstand R7. Sobald die Spannung am Kondensator C5 unter den zur Ansteuerung des elektronischen Schalters ES2 erforderlichen Wert fällt, sperrt der elektronische Schalter ES2. Dadurch wird der Selbsthaltestromkreis über die Diode D1 unterbrochen und der Elektromagnet fällt ab. Die Schaltverzögerung liegt bei etwa 50 bis 60 ms.

Die Aufladung des Kondensators C5 kann alternativ auch über den Ausgang 15 des Operationsverstärkers OV1 erfolgen. - Eine Ansteuerung des elektronischen Schalters ES2 ist auch auf optoelektronischem Wege direkt vom Ausgang des Operationsverstärkers OV3 her möglich.

## Patentansprüche

1. Unterspannungsauslöser auf elektronischer Basis zur Überwachung der Spannung eines ein- oder mehrphasigen Niederspannungsnetzes,
enthaltend einen Elektromagneten (EM) zur Auslösung eines Schaltgerätes, wenn die Spannung des Netzes eine vorbestimmte Größe unterschreitet, und eine den Elektromagneten (EM) speisende Treiberschaltung,
wobei die Treiberschaltung
- eine Gleichrichterschaltung zur Gewinnung eines Gleichstromes,
- eine der Gleichrichterschaltung nachgeordnete Hilfsspannungsquelle (HQ) zur Spannungsversorgung der Elektronik,
- einen Impulsgeber zur Erzeugung eines bei ausreichender Höhe der Netzspannung von dieser im wesentlichen unabhängigen getakteten Haltestromes und
- eine mit einem Unterspannungsdetektor versehene Schwellwertschaltung zur Unterbrechung des den Elektromagneten im angezogenen Zustand haltenden getakteten Haltestromes umfasst und der Impulsgeber
- einen Operationsverstärker (OV1),
- einen durch den Operationsverstärker (OV1) gesteuerten elektronischen Schalter (ES1), welcher in Reihe mit einem Widerstand (R4) im Haltestromkreis des mit einer Freilaufdiode (D1) beschalteten Elektromagneten (EM) liegt,
- und einen Rückkopplungspfad zur Einwirkung der an dem Widerstand (R4) abfallenden Spannung auf den Eingang des Operationsverstärkers (OV1) aufweist,
**dadurch gekennzeichnet,**
- **dass** in dem aus dem Elektromagneten (EM) und der Freilaufdiode (D1) gebildeten Selbsthaltestromkreis ein weiterer elektronischer Schalter (ES2) zwischen dem Elektromagneten (EM) und dem erstgenannten elektronischen Schalter (ES1) angeordnet ist und
- **dass** zur Ansteuerung des weiteren elektronischen Schalters (ES2) in Abhängigkeit vom Ausgangssignal des Unterspannungsdetektors und vom Schaltzustand des erstgenannten elektronischen Schalters (ES1) ein Zeitglied vorgesehen ist, das einen Widerstand (R7) und einen Kondensator (C5) aufweist,
- wobei zum Durchschalten des weiteren elektronischen Schalters (ES2) bei durchgeschaltetem elektronischen Schalter (ES1) der Kondensator (C5) aufgeladen und zum Sperren des weiteren elektronischen Schalters (ES2) bei gesperrtem elektronischen Schalter (ES1) der Kondensator (C5) über den Widerstand (R7) entladen wird.

2. Unterspannungsauslöser nach Anspruch 1,
**dadurch gekennzeichnet, dass**
der weitere elektronische Schalter (ES2) durch eine Brücke (KB) kurzschließbar ist.

3. Unterspannungsauslöser nach Anspruch 1,
**dadurch gekennzeichnet, dass**
das Zeitglied mit seinem einen Pol über eine Diodenschaltung an die Hilfsspannungsquelle (HQ) angekoppelt ist.

4. Unterspannungsauslöser nach Anspruch 1,
**dadurch gekennzeichnet, dass**
das Aufladen des Kondensators (C5) des Zeitgliedes über einen Ausgang (15) des Operationsverstärkers (OV1) erfolgt.

## Claims

1. Undervoltage release on an electronic basis for monitoring the voltage of a single-phase or polyphase low-voltage power supply system,
containing an electromagnet (EM) for tripping a switching device when the voltage of the power supply system falls below a predetermined magnitude, and a driver circuit feeding the electromagnet (EM),
with the driver circuit having
- a rectifier circuit for obtaining a direct current,
- an auxiliary voltage source (HQ), which is arranged downstream from the rectifier circuit, for supplying voltage to the electronics,
- a pulse transmitter for producing a pulsed holding current which, provided the power supply system voltage is sufficiently high, is essentially independent of this power supply system voltage, and
- a threshold value circuit, which is provided with an undervoltage detector, for interrupting the pulsed holding current which holds the electromagnet in the pulled-in state, and the pulse transmitter has
- an operational amplifier (OV1)
- an electronic switch (ES1) which is controlled by the operational amplifier (OV1) and is connected in series with a resistor (R4) in the holding circuit of the electromagnet (EM), which is connected to a freewheeling diode (D1),
- and with a feedback path to allow the voltage which is dropped across the resistor (R4) to act on the input of the operational amplifier (OV1),
**characterized**
- **in that** the self-holding circuit which is formed from the electromagnet (EM) and the freewheeling diode (D1) contains a further electronic switch (ES2) which is arranged between the electromagnet (EM) and the first-mentioned electronic switch (ES1), and
- **in that** a timer is provided, which has a resistor (R7) and a capacitor (C5), in order to drive the further electronic switch (ES2) as a function of the output signal from the undervoltage detector and of the switching state of the first-mentioned electronic switch (ES1),
- with the capacitor (C5) being charged in order to switch the further electronic switch (ES2) on in the case of the switched
- on electronic switch (ES1), and the capacitor (C5) being discharged via the resistor (R7) in order to switch the further electronic switch (ES2) off in the case of the switched-off electronic switch (ES1).

2. Undervoltage release according to Claim 1, **characterized in that** the further electronic switch (ES2) can be shortcircuited by means of a link (KB).

3. Undervoltage release according to Claim 1, **characterized in that** the timer is coupled with one of its poles to the auxiliary voltage source (HQ) via a diode circuit.

4. Undervoltage release according to Claim 1, **characterized in that** the capacitor (C5) for the timer is charged via one output (15) from the operational amplifier (OV1).

## Revendications

1. Déclencheur à minimum de tension à base électronique pour la surveillance de la tension d'un réseau à basse tension monophasé ou polyphasé,
contenant un électroaimant (EM) pour le déclenchement d'un appareil commutateur lorsque la tension du réseau devient inférieure à une grandeur prédéterminée et un circuit d'attaque alimentant l'électroaimant (EM),
le circuit d'attaque comprenant :
- un circuit redresseur pour l'obtention d'un courant continu,
- une source de tension auxiliaire (HQ) branchée du côté aval du circuit redresseur pour l'alimentation en tension de l'électronique,
- un générateur d'impulsions pour la production d'un courant de maintien découpé globalement indépendant de la tension de réseau lorsque celle-ci a une grandeur suffisante, et
- un circuit à valeur de seuil muni d'un détecteur de minimum de tension pour l'interruption du courant de maintien découpé maintenant l'électroaimant dans l'état attiré,
et le générateur d'impulsions comportant :
- un amplificateur opérationnel (OV1),
- un interrupteur électronique (ES1) qui est commandé par l'amplificateur opérationnel (OV1) et qui se trouve en série avec une résistance (R4) dans le circuit de courant de maintien de l'électroaimant (EM) branché avec une diode de roue libre (D1),
- et une voie de rétroaction pour l'influence de la tension chutant à la résistance (R4) sur l'entrée de l'amplificateur opérationnel (OV1),
**caractérisé par le fait que**
- dans le circuit de courant d'auto-maintien formé par l'électroaimant (EM) et la diode de roue libre (D1), un autre interrupteur électronique (ES2) est placé entre l'électroaimant (EM) et le premier interrupteur électronique mentionné (ES1), et
- pour la commande de l'autre interrupteur électronique (ES2) en fonction du signal de sortie du détecteur de minimum de tension et en fonction de l'état de commutation du premier interrupteur électronique mentionné (ES1), il est prévu un temporisateur qui comporte une résistance (R7) et un condensateur (C5),
- le condensateur (C5) étant chargé pour connecter l'autre interrupteur électronique (ES2) lorsque l'interrupteur électronique (ES1) est connecté et le condensateur (C5) étant déchargé par l'intermédiaire d'une résistance (R7) pour bloquer l'autre interrupteur électronique (ES2) lorsque l'interrupteur électronique (ES1) est bloqué.

2. Déclencheur à minimum de tension selon la revendication 1,
**caractérisé par le fait que** l'autre interrupteur électronique (ES2) peut être court-circuité par un pont (KB).

3. Déclencheur à minimum de tension selon la revendication 1,
**caractérisé par le fait que** le temporisateur est couplé par l'un de ses pôles à la source de tension auxiliaire (HQ) par l'intermédiaire d'un circuit à diodes.

4. Déclencheur à minimum de tension selon la revendication 1,
**caractérisé par le fait que** le chargement du condensateur (C5) du temporisateur s'effectue par l'intermédiaire d'une sortie (15) de l'amplificateur opérationnel (OV1).
